# EUROPÄISCHE PATENTANMELDUNG

(11) **EP 2 452 889 A1**
(43) Veröffentlichungstag der Anmeldung: **16.05.2012**
(21) Anmeldenummer: 11004655.4
(22) Anmeldetag: 08.06.2011
(51) Int. Cl.: B65D 47/26, B65D 47/32

(54) **Einstellbarer Trinkflaschenverschluss mit Trinkhalmfunktion**

(30) Priorität: 13.11.2010 DE 102010049727
(71) Anmelder: Silag Handel AG, 40764 Langenfeld/ Rhld (DE)
(72) Erfinder: Hidde, Axel. R., Dr. Ing., 57076 Siegen (DE); Idziaczyk, Matthias, 40764 Langenfeld (DE)

(57) **Zusammenfassung**

Vorgestellt wird ein Trinkverschluß (5) für eine Trinkflasche (1) mit einstellbarer Entnahme und Trinkhalmfunktion.

Über die relative Drehstellung zwischen einem Schraubverschluß (5) und einem Drehverschluß (7) wird die Durchflußöffnung des Trinkkanals von maximal - ca. 5 mm Durchmesser Durchgangsbohrung für die Trinkhalmaufnahme - bis minimal eingestellt, auch je nach der Viskosität - dünnflüssig bis pastös - des Flascheninhalts, bei gleichzeitiger Öffnung eines Entlüftungskanals. Eine hufeisenförmige Vertiefung mit zwei kleinen Bohrungen als Teil des Entlüftungskanals ist so lagegerecht gestaltet, daß bereits bei noch geschlossener und verrasteter Verschlußkappe Überdruck aus dem Flaschenkörper über die Entlüftungsbohrung des Schraubverschlusses und die Vertiefung und die Entlüftungsbohrungen des Drehverschlusses nach außen entweichen kann.

## Beschreibung

Die Erfindung betrifft einen Trinkflaschenverschluß für eine Trinkflasche zur Getränkeaufbewahrung für Schule, Sport, Reise und Freizeit - insbesondere einen Verschluß für eine Kinder-Trinkflasche zur Getränkeaufbewahrung für Schule, Sport, Reise und Freizeit mit einstellbarer Entnahme und Trinkhalmfunktion.

Derartige Trinkflaschen sind in unterschiedlichen Ausführungen und für verschiedene Anwendungen bekannt. Sie werden beispielsweise dazu benutzt, beim Leistungssport oder während der Freizeit von Sportlern oder Amateuren während der Ausübung ihres Sports oder während Ausflügen, Wanderungen, Picknicks oder dergleichen bei dem Benutzer für einen ausgeglichenen körperlichen Flüssigkeitshaushalt zu sorgen oder aus Bequemlichkeits- oder Sauberkeitsgründen Kleinkinder zu versorgen oder von Jugendlichen aller Altersgruppen unterschiedlichen Anlasses. Bezogen auf den Leistungssport sind die Trinkflaschen mit speziellen Anforderungen und in bestimmten Ausführungsformen bei Radsportlern bei langen Touren unentbehrlich, da der hohe Flüssigkeitsverlust durch Flüssigkeitsaufnahme ausgeglichen werden muß. Nicht minder hohe Anforderungen werden an Ausführungsformen für Kinder-Trinkflaschen gestellt.

Anforderungen an Trinkflaschen sind
- Im verschlossenen Zustand wird absolute Dichtheit erwartet, ein Auslaufen ist unter allen Umständen zu vermeiden - korrekte Handhabung vorausgesetzt
- Die Transportlage hat keinen Einfluß auf die Funktionalität und die Dichtheit der Flasche
- Überdruck muß in der Flasche aus Geschmacksgründen gehalten werden
- Bei der Flüssigkeitsentnahme darf kein Überdruck in der Flasche - z.B. durch kohlensäurehaltige Getränke oder durch andere Höhenlage - anstehen
- Während der Entleerung der Flasche darf sich kein Unterdruck in der Flasche aufbauen
- Die Flasche ermöglicht den Einsatz eines Trinkhalms und ist durch einen Trinkhalm entleerbar
- Der Flascheninhalt kann Medien unterschiedlicher Viskosität enthalten - von dünnflüssig bis pastös; der Aus-/Durchfluß ist entsprechend anzupassen
- Die Flasche muß einfach in der Handhabung und sicher in der Bedienung sein; manchmal ist eine Einhand-Bedienung gefordert
- Die Trinkflasche muß verschiedene Anforderungen erfüllen oder eine Spezies bilden; eine Kindergarten-Applikation kann sich von der Radsport-Anwendung differenzieren
- Die Beschichtung des Innenraums der Flasche muß Geschmacksneutralität garantieren
- Die Flasche muß Hygiene-Anforderungen gerecht werden; sie muß leicht zerlegbar und zu reinigen sein - vor allem die Verschlußeinrichtung betreffend
- Die verwendeten Herstellungsverfahren und eingesetzten Materialien müssen Bedingungen erfüllen, wie z.B. Medizin-Geräteverordnung, Lebensmittelverordnung; Zulassungsbeschränkungen sind zu beachten
- Dennoch muß der Herstellungsaufwand überschaubar bleiben, die Teilezahl ist gering zu halten, auf Wiederverwendungsteile ist zu achten, der Abgabepreis muß stimmen.

Der im wesentlichen zylinderförmige Flaschenkörper ist je nach Applikation angepaßt - entweder glatter hohlzylinderförmiger Körper z.B. aus Metall, Aluminium, mit Innen- und Außenlackierung oder -beschichtung, leicht zu pflegen, oder - für Leistungssport, hier vor allem Radsport - hier werden die Trinkflaschen auch als Bidon bezeichnet, oder anspruchsvolle Freizeit - aus Kunststoffwerkstoff, gespritzt oder geblasen, mit einem Aufnahmebereich für eine Gestängebefestigung und einer Griffigkeit - nicht zu weich - für eine Einhand-Bedienung. Am Flaschenkopf mit Einfüllöffnung ist die Befestigung für die Verschlußeinrichtung vorgesehen, meistens ein Innen- oder ein Außengewinde aus Kunststoff - bei Metallflaschen angespritzt und verdrehgesichert. Aus Hygienegründen ist die Pflege eines Außengewindes zugänglicher.

Die Verschlußeinrichtung muß eine Reihe von Funktionen erfüllen; es muß ein Verschluß betätigt werden unter einhändiger Bedienung der Flasche. Vorgesehen sind mit dem Mund über ein Mundstück zu öffnende, sich in axialer Richtung bewegende Verriegelungen, wie auch axial bewegte Verriegelungen, die über ein Schrauben- oder Schneckentrieb durch händische Drehung an der Kappe - meist nur zweihändisch zu handhaben - angetrieben werden. Weiterhin sind Verschlüsse bekannt, die durch Verdrehung von übereinanderliegenden Dichtscheiben mit exzentrischen Öffnungen oder Scheiben mit nach außen geführten Hebeln - Schiebern - betätigt werden. Unter Berücksichtigung, daß die Verschlußeinrichtung mehrere Betriebszustände und -stellungen beinhaltet, die auch handhab- und bedienbar - auch für Kinder - sein müssen und auch unter dem Gesichtspunkt der Pflegeleichtigkeit, scheint die Dichtscheibenlösung eine in mehrfacher Hinsicht günstige Alternative.

Im folgenden wird der Stand der Technik von Verschlüssen von Trinkflaschen zur Getränkeaufbewahrung für Schule, Sport, Reise und Freizeit - insbesondere von Trinkverschlüssen von Kinder-Trinkflaschen zur Getränkeaufbewahrung für Schule, Sport, Reise und Freizeit mit einstellbarer Entnahme und Trinkhalmfunktion - gewürdigt; gemäß dem Stand der Technik sind, je nach Anwendungsbezug, eine Vielzahl von Typen von Verschlüssen für Trinkflaschen zur Getränkeaufbewahrung für Schule, Sport, Reise und Freizeit - insbesondere von Verschlüssen von Kinder-Trinkflaschen zur Getränkeaufbewahrung für Schule, Sport, Reise und Freizeit - im Einsatz.

Die europäische Patentanmeldung EP 1 890 945/amerikanische Anmeldung US 2009 277 907/kanadische Anmeldung CA 2 610 734/internationale Anmeldung W02006/131 002 offenbart einen Verschluß für eine Trinkflasche, bestehend aus einer in einem Trinkflaschenhals anschraubbaren Verschlußkappe und einer Absperr- und Öffnungsvorrichtung, welche ein bezüglich der Verschlußkappe feststehendes Fixteil und ein bezüglich der Verschlußkappe in Axialrichtung verschiebbares Schiebeteil aufweist, welches aus einer Verschlußstellung in eine Trinkstellung zu bewegen ist, die den Auslauf des Flascheninhalts aus der Flasche ermöglicht. Das Schiebeteil ist um das Fixteil so federnd gelagert, daß mindestens ein Rückstellmittel mit einer Kraft in Wirkrichtung von der Verschlußkappe weg, nach außen, auf das Schiebeteil wirkt. Das Schiebteil befindet sich in der Verschlußstellung in der äußeren Position und ist für den Übergang in die Trinkstellung auf die Verschlußkappe zu, nach innen, gegen den Widerstand mindestens eines Rückstellmittels zu bewegen. Fixteil und Schiebeteil haben die Dichtfunktion der Trinkflasche inne; wird die Kalotte des Fixteils durch menschlichen Biß mechanisch beschädigt, ist die Dichtheit nicht mehr gegeben. Das Schiebeteil mit der Rückstellfeder läßt in einer Ruhestellung nur die Schließstellung zu.

Gemäß des deutschen Gebrauchsmusters DE 20 2006 016 173/Patentschrift DE 10 2007 050 000 wird eine Flasche mit Schraubverschlußkappe und integriertem Trinkhalm derart vorgestellt, daß der Trinkhalm flaschenbodenbündig und ggf. schraubkappenbündig mindestens einmal geknickt diagonal in der Flasche befindlich bei Öffnen des Schraubverschlusses - zwecks Erlangung seines Herstellungszustands - seinem Behältnis entspringt.

Flascheninhalt und Trinkhalmwerkstoff müssen abgestimmt sein. Das der Flasche entspringende Trinkhalmende darf keine Flascheninhalte enthalten.

Die amerikanische Patentschrift US 2002/179 616 beschreibt die Ausführung eines 'Lippenbetätigten Ventilverschlusses für eine Trinkflasche' bestehend aus einer Verschlußkappe mit Innengewinde für die Flaschenmontage, mit je innen- und außenliegendem hohlzylinderförmigem Rohransatz sowie mittig angeordnetem, außenseitigem Ventilelement, wobei der außenliegende Rohransatz eine mittig gelochte topfförmige, in axialer Richtung beweglich angeordnete Kappe führt, zwischen der und dem Ventilelement ein hohlzylinderförmiges Elastomer-Dicht- und Formstück als Membran-Element eingespannt ist. Wird auf die Kappe in axialer Richtung auf die Flasche zu eine Kraft ausgeübt, knickt das Membran-Element an vorgegebener Gelenkstelle ein und öffnet den dichtenden Verschluß zwischen seiner ringförmigen Lippe und dem hinterschnittenen Kragen des Ventilelements.

Da das Membran-Element wie eine Feder wirkt, gibt es keinen weiteren statischen Zustand als den des geschlossenen Ventils; der Entnahmedurchfluß wird durch den Druck auf das Membran-Element bestimmt. Ein Trinkhalm kann nicht eingesetzt werden.

Die deutsche Patentschrift DE 196 30 579/europäische Patentschrift EP 822 149 stellt eine Trinkflasche - insbesondere einen Trinkflaschenverschluß - vor, bestehend aus einer Verschlußkappe mit Innengewinde, mit dieser verbunden eine aufrastbare, gegenüber der Verschlußkappe begrenzt um die axiale Achse drehbar gelagerte und gegen diese durch eine Flachdichtung gedichtete Kappe mit einem hohlzylinderförmigen Ansatz, der das Mundstück aufnimmt, und der zusammen mit dem hohlzylinderförmigen, ins Flascheninnere weisenden Ansatz der Verschlußkappe die Entnahmeöffnung bildet. Außerdem verfügt die Kappe über einen angespritzten, nach außen weisenden Halter mit Gelenkschaft zur Aufnahme des Gelenkbolzens eines drehbar gelagerten und - gegenüber dem Gelenk - in der Verschlußkappe rastenden, etwa halbkugelförmigen Deckels, der nur in der Trink-Drehposition 'Offen' von Verschlußkappe und Kappe geöffnet werden kann. Vor der Position 'Offen' befindet sich eine Drehstellung 'Entlüften', bei der ein Entlüftungskanal von der Verschlußkappe, über die Flachdichtung, über eine Ringnut des Mundstücks und eine RadialBohrung im Ansatz der Kappe offengelegt wird zu dem Zweck, daß unter Innendruck stehende Flaschen vor dem Öffnen bei noch geschlossenem Deckel entlüften - ohne zu Spritzen.

Die Handhabung der Flasche bzw. des Verschlusses sieht neben der 'Auf'-/'Zu'-Stellung keine Zwischenpositionen beim Öffnen vor.

Die europäische Patentanmeldung EP 461 065/schweizerische Anmeldung CH 19 36/90 stellt einen Verschluß für eine Trinkflasche vor mit einem Mundstück, welches im hohlzylinderförmigen Schraubteil axial verschiebbar angeordnet und im eingeschobenen Zustand durch einen am Schraubteil befestigten Zapfen verschlossen wird. Ein seitlich außerhalb des Mundstücks im Schraubteil angebrachter Belüftungskanal, der durch einen am Mundstück angespritzten, in den Belüftungskanal hineinragenden Dom verschließbar ist, ermöglicht den Zutritt von Luft zum Innern der Flasche und verhindert die Bildung eines Unterdrucks innerhalb der Flasche.

Die axiale Verschiebung des Mundstücks im Schraubteil läßt keine Zwischenstellungen außer 'Offen' oder 'Geschlossen' zu.

Die deutsche Patentschrift DE 44 95 238/schweizerische Anmeldung CH 687 074/ internationale Anmeldung WO1995/003 227 offenbart einen Verschluß für eine Trinkflasche oder ein Bidon, der einen sicheren Druckausgleich in der Flasche auch bei kontinuierlicher Flüssigkeitsentnahme gewährleistet, ohne dabei eine Leckage in Kauf nehmen zu müssen. Der Verschluß besteht aus einem Deckelteil mit einem zentrischen, axialen, stationären Führungsstift, der zur Flasche hin als Tellerventil ausgebildet ist, sowie einem koaxial dazu angeordneten, axial verschiebbaren, am freien Ende als Mundstück ausgebildeten hohlzylinderförmigen Stößel, der mit dem Führungsstift einen Ringkanal bildet für den austretenden Flaschen- oder Bidoninhalt. Im Stößel sitzt eine kreisförmige Dichtung, die als Ventilsitz mit dem Tellerventil zusammenwirkt. Außerhalb des Stößels ist ein gesonderter Luft-Strömungsweg für den Druckausgleich vorhanden, in welchem durch den Stößel betätigbare zusätzliche Ventilmittel angeordnet sind.

Die Ventil-Steuerungen von Flascheninhalt und Luft erfolgen über den gleichen Stössel und haben nur die Betriebszustände 'Auf' und 'Zu'.

Die schweizerische Patentschrift CH 686 244/deutsches Gebrauchsmuster DE 93 11 815 wird die Verschlußkappe der Trinkflasche aus Patentschrift CH 684 639/ ... , bestehend aus einem Flaschenkörper, einer auf den Flaschenhals aufschraubbaren Verschlußkappe, einem in der Verschlußkappe durch Schraubdrehung axial beweglichen Mundstück und ggf. einer das Mundstück schützenden klappbaren Abdeckung, durch ein aus lebensmitteltauglichem Elastomer - wie Silikongummi - aufgebauten Rückschlagventil ergänzt, welches bei Flaschenunterdruck öffnet und diesen abbaut, jedoch den Abbau eines Flaschenüberdrucks durch vorsichtiges Öffnen der Lüftungskanäle verhindert. Flaschenüberdruck kann nur noch durch Öffnen des Trinkkanals abgebaut werden; gezielte Trinkvolumen können nicht eingestellt werden.

Das deutsche Gebrauchsmuster DE 93 10 432 offenbart einen Spender für rieselfähige Güter - wie Tabletten, Dragees, Kapseln oder dgl. - bestehend aus einer Grundplatte mit einem röhrförmigen Ansatz - ausgeprägt als Behälterhalspassung - und einer auf der Grundplatte drehbar mittig angeordneten Wählscheibe, wobei Grundplatte und Wählscheibe mit jeweils mindestens einer exzentrisch angeordneten Ausnehmung versehen sind und die Ausnehmungen den gleichen Abstand von der Drehachse aufweisen. Die Ausnehmungen können kreisförmig und mit gleichem Querschnitt ausgebildet sein. Die Grundplatte kann mit einer und die Wählscheibe mit mehreren Ausnehmungen unterschiedlicher Querschnitte ausgebildet sein; die jeweilige Entnahmeeinstellung von Grundplatte und Wählscheibe wird durch in entsprechende Vertiefungen der Grundplatte eingreifende Rastnocken der Wählscheibe fixiert.

Eine gezielte vereinzelte Behälterentnahme ist mit der Anordnung nicht möglich.

Gemäß der schweizerischen Patentschrift CH 684 639/deutsches Gebrauchsmuster DE 93 03 734/französisches Gebrauchsmuster FR 2 689 102 wird eine Trinkflasche vorgestellt bestehend aus einem Flaschenkörper, einer auf den Flaschenhals aufschraubbaren Verschlußkappe, einem in der Verschlußkappe durch Schraubdrehung axial beweglichen Mundstück und ggf. einer das Mundstück schützenden klappbaren Abdeckung. Gedichtet wird zwischen Flaschenhals und Verschlußkappe mit einer Flachdichtung, zwischen den Lüftungskanälen der Verschlußkappe und dem Mundstück ebenfalls durch eine Flachdichtung und zwischen dem Trinkkanal der Verschlußkappe und dem Mundstück mittels eines O-Rings. Da konstruktiv die Lüftungskanäle früher öffnen als der Trinkkanal, soll erreicht werden, daß ein bestehender Differenzdruck in der Flasche ausgeglichen wird, ohne dem Benutzer zu schädigen.

Eine mögliche Leckage durch die Lüftungskanäle wird nicht verhindert, eine gezielte Einstellbarkeit des Volumenstroms durch den Trinkkanal ist nicht gegeben.

Die deutsche Offenlegung DE 43 03 668 beschreibt einen Verschluß für Sport- und Reise-Trinkflaschen, der aus einem in die Flasche einschraubbarem hohlzylinderförmigem Grundkörper mit radial angeordneten Entlüftungsbohrungen und in axialer Richtung mittig angespritztem sich nach außen trichterförmig öffnendem Mündstück, welches mit dem Flascheninhalt im Innern durch eine Tülle und ein Steigrohr verbunden ist, besteht und eine über ein Filmscharnier angespritzte topfförmige Kappe besitzt, die - über den Grundkörper geklappt - mit einem innenliegenden Ringmantel die Entlüftungen und mit einem - im Kappendeckel angespritzten Stopfen - das trichterförmige Mundstück verschließt.

Die so gestaltete Trinkflasche kennt nur die beiden Zustände bei geschlossener oder geöffneter Kappe.

Gemäß der amerikanischen Patentschrift US 5 509 551 wird ein Ersatz-Flaschenverschluß für eine normierte Getränkeverpackung vorgestellt. Der Flaschenverschluß besteht aus einem Schraubdeckel mit Befestigungslaschen für einen Tragegurt, hat einen integrierten Trinkhalm oder integrierte Anschlußstutzen zur Aufnahme eines Trinkhalms nach außen und ins Flascheninnere und eine Belüftungseinrichtung mit einem in axialer Richtung verstellbaren Verschlußelement. In einer weiteren Ausführungsform erhält der Deckel eine geometrisch angepaßte drehbar gelagerte Funktionsplatte mit einer 'Auf'- und 'Zu'-Stellung für den dichten Verschluß der Entnahmeöffnung.

Unter Vernachlässigung textlicher und zeichnerischer Mängel sieht die Deckelanordnung keine dosierte Entnahme vor.

Die amerikanische Patentschrift US 5 294 014 präsentiert eine Schließanordnung für Behälter - insbesondere für eine Trinktasse mit größerer Kapazität - mit einer in der horizontalen Ebene verdrehbaren Verschlußscheibe, die einen seitlichen Hebel aufweist, wodurch eine Einhand-Bedienung ermöglicht wird. Die Schließanordnung zeichnet sich weiterhin durch einen flüssigkeits- und luftdichten Verschluß aus, der sich jedoch einfach durch den Benutzer betätigen läßt. Die Schließeinrichtung besteht aus einem Gehäuse mit einem Ausguß für flüssiges oder fließfähiges Gut aus dem Behälter sowie einem mittig auf dem Gehäuse angebrachten Drehteil mit einem Dichtmittel, welches den Ausguß in der geschlossenen Stellung dichtet. Ein Druckmittel, welches bei Drehung der Verschlußscheibe reagiert, erzeugt eine Kraft senkrecht auf das Dichtmittel und den Ausguß absolut dichtet.

Die Schließanordnung hat einen hebelbetätigten Zwei-Stellungs-Verschluß, wobei in der Schließendstellung zusätzlich ein Rastnocken auf die Ausgußdichtung wirkt.

Mit der deutschen Offenlegung DE 18 16 709 wird ein Verschluß für insbesondere einen Kunststoffbehälter vorgestellt, in dem zunächst ein erster Deckel mit einer exzentrisch gelagerten Füll-/Entleerungsöffnung mit seinem überstehenden Rand undrehbar an dem Behälterrand durch Übergreifen der umlaufenden Ringwulst rastend befestigt wird. Über den ersten wird ein zweiter Deckel mit einer exzentrisch gelagerten Füll-/Entleerungsöffnung gestülpt, dessen überstehender Rand mit seiner Innenseite, die eine umlaufende Rippe besitzt, eine vorspringende Lippe des ersten Deckels umfaßt, und mit diesem ein Loslager bildet. Durch Verdrehen des zweiten Deckels gegen den ersten Deckel können die beiden exzentrischen Deckelöffnungen zum Behälterfüllen oder -entleeren gegenübergestellt werden.

Über die Dichtigkeit der Verschlußeinrichtung wird keine Aussage getroffen.

Die deutsche Patentschrift DE 65 85 62/schweizerische Schrift CH 19 94 08 stellen eine Feldflasche mit einem aufgeschraubtem Verschluß vor, der aus einem Verschlußkopf und einer in axialer Richtung verschiebbaren und unter Federdruck stehenden Kappe - mit in axialer Richtung verlaufendem Trinkrohr mit beim Einwärtsschieben sich freilegenden Zuflußöffnungen und innerhalb des Trinkrohrs ein ebenfalls in axialer Richtung verlaufenden Luftrohrs mit radialem seitlichen Anschluß - besteht, so daß bei leichtem Druck auf die Kappe in Richtung Flaschenkörper die Zuflußöffnungen innerhalb der Flasche freiliegen und gleichzeitig der axiale Austritt des Luftrohrs mit der Außenwelt ebenfalls. Zum Zwecke des bequemeren Trinkens und Befüllens der Flasche, kann die Kappe in diesem Zustand durch doppelten Bajonettverschluß drehbar verriegelt werden.

Der aus metallischen Werkstoffen gestaltete Verschluß läßt zwar theoretisch durch differenzierte Axialverschiebung gesteuerte Entnahmen zu, jedoch läßt der doppelte Bajonettverschluß nur die Auf- und die Zu-Stellung zu.

Die deutsche Patentschrift DE 4 66 92 beschreibt einen Flaschenverschluß bestehend aus einem den Flaschenkopf bündig abschließenden zentrisch axial durchbohrten Korkpfropfen, der auf der der Flasche abgewandten Seite eine auf die Bohrung aufgesetzte Verschlußeinrichtung aus drei übereinander angeordneten, mit dem Flaschenkopfrand abschließende Kreisscheiben trägt, wobei der Durchmesser der mittleren Verschlußscheibe etwas größer als der Radius der beiden anderen Scheiben ist, die Verschlußscheibe über einen Führungsstift der ersten inneren Scheibe exzentrisch drehbar angeordnet ist, über einen weiteren Mitnehmerstift der dritten äusseren Scheibe verdreht werden kann und ein Ventil dahingehend bildet, daß durch die Verdrehung eine asymmetrisch angeordnete Durchflußbohrung mit den mittig angeordneten Durchflußbohrungen der ersten und der dritten Scheibe und der Pfropfenbohrung in Einklang gebracht werden kann und den geöffneten Verschlußzustand herstellt.

Durch Drehung der dritten Scheibe - jeweils bis der Mitnehmerstift an einem Langlochende anschlägt - wird die 'Offen'- oder 'Geschlossen'-Position eingestellt; eine Trinkhalmfunktion ist nicht vorgesehen.

Alle vorgestellten Veröffentlichungen eignen sich nur bedingt oder gar nicht für den spezifischen Einsatz als Trinkverschluß für eine Trinkflasche zur Getränkeaufbewahrung für Schule, Sport, Reise und Freizeit - insbesondere nicht als Verschluß für eine Kinder-Trinkflasche zur Getränkeaufbewahrung für Schule, Sport, Reise und Freizeit mit einstellbarer Entnahme und Trinkhalmfunktion.

Der Erfindung liegt daher die Aufgabe zu Grunde, eine Einrichtung nach dem Oberbegriff des Anspruchs 1, einen Trinkverschluß für eine Trinkflasche zur Getränkeaufbewahrung für Schule, Sport, Reise und Freizeit - insbesondere einen Verschluß für eine Kinder-Trinkflasche zur Getränkeaufbewahrung für Schule, Sport, Reise und Freizeit mit einstellbarer Entnahme und Trinkhalmfunktion zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Die Trinkflasche gemäß der erfinderischen Neuheit besteht aus einem hohlzylinderförmigen metallenen Flaschenkörper mit einem Kunststoff-Außengewinde am Flaschenhals, das mit einer zylinderförmigen Flaschenverschlußeinrichtung mit Innengewinde in dichter lösbarer Verbindung steht, die aus einem Schraubverschluß besteht, der über eine weitere Dichtung ein drehbar gelagertes Mundstück aufnimmt, welches außerdem über eine angespritzte Aufnahme verfügt, das mit dem Kappengelenk der etwa halbkugelförmigen Verschlußkappe klappbar und - auf der gegenüberliegenden Seite - mit dem Verschluß rastbar in Verbindung steht.

Eine weitere Ausgestaltung der Erfindung sieht vor, daß der Flaschenkörper der Trinkflasche aus Aluminium gefertigt ist mit einem nach innen gewölbtem Flaschenboden. Zum Flaschenhals hin verjüngt sich der Flaschenkörper in Form einer Kugelkalotte zu einem hohlzylinderförmigen Ansatz, der mit einer schmalen, rechtwinklig nach außen abgeknickten Berandung endet. Der Ansatz ist Träger eines angespritzten, drehfest sitzenden Kunststoffrings, versehen mit einem Außengewinde, welches am unteren Anschlag des Kunststoffrings endet. Die Flasche ist innen absolut oberflächenglatt beschichtet und außen farbig lackiert.

Eine weitere Ausprägung der Erfindung sieht vor, daß die Flaschenverschlußeinrichtung aus einem Schraubverschluß, einem Drehverschluß mit Mundstück sowie einer Verschlußkappe besteht. Der topfförmig ausgeprägte Schraubverschluß besitzt eine zweischalig ausgeführte, durch Verbindungsstege gestützte, zylinderförmige Seitenwand, wobei die Außenschale die Griffläche bildet und durch Rippen und Griffmulden kenntlich ist, während die Innenschale das mehrgängige Innengewinde - passend zum Außengewinde des Flaschenkörpers - trägt, das der Schraubverbindung einen festen Sitz ermöglicht. Das Innengewinde läuft innen in einer durch einen zylinderförmigen Ansatz gebildeten zylindrischen Rechtecknut aus, die die Flachdichtung aufnimmt und die Dichtung zur Berandung des Ansatzes des Flaschenhalses darstellt.

Eine weitere Ausprägungsform der erfinderischen Neuheit ist dadurch gegeben, daß der Schraubverschluß mit dem Drehverschluß und dem Mundstück das Flaschenventil bildet, welches mehrere Betriebszustände durch Drehstellungen abbildet. Dazu besitzt der Schraubverschluß auf seiner Oberseite - der Deckelfläche - einen rohrförmigen außenliegenden Ansatz, dessen innenliegende Zylinderwand die Führung für den Drehverschluß darstellt und selbigen aufnimmt. Die Außenwand des Drehverschlusses ragt in eine zylinderförmige Nut bündig zur innenliegenden Zylinderwand, nimmt eine weitere ringförmige Flachdichtung auf und dichtet zwischen Schraubverschluß und Drehverschluß ab.

Diese Zylinderwand hat mit dem über eine bestimmte Länge - Drehwinkel - ausgedehnten, nach außen ragenden Rastvorsprung mit einseitigem Endanschlag eine weitere Funktion inne; der Rasthaken der mit dem Drehverschluß mechanisch in Verbindung stehenden Verschlußkappe greift durch Hinterschnitt unterhalb des Rastvorsprungs und verriegelt die Ver-schlußkappe über die Länge/den Drehwinkel des Vorsprungs.

Zur Mitte des Schraubverschlusses hat die Fläche zwei fast halbkreisförmige Schlitze, wo die Befestigungshaken des Drehverschlusses durchstoßen und unterhalb der Fläche verrasten; wobei die Längenausprägung der Schlitze den Verfahr-/Drehweg für den Drehverschluß und der mit diesem beweglich verbundenen Verschlußkappe darstellt.

Im Zentrum des Schraubverschlusses bildet sich eine von außen topfförmige Vertiefung mit einem durch drei Stege dreigeteilten Raum mit etwa zweimal 1/4 Rauminhalt und einmal 1/2 Rauminhalt. Der große Raum besitzt etwa mittig eine kleine Bohrung, die die Funktion der Entlüftungsbohrung inne hat und einen Teil des Entlüftungskanals bildet. Weiterhin hat dieser Raum einen tropfenförmigen, berandeten Durchbruch, der einen Teil des einstellbaren Trinkkanals bildet. Die topfförmige Vertiefung wird bis Oberkante Stege und tropfenförmige Berandung durch eine hervorstehende dichtende Zylinderfläche des Drehverschlusses gedeckelt, die einerseits über eine Durchgangsbohrung als Teil des Trinkkanals und andererseits über eine hufeisenförmige Vertiefung mit zwei kleinen Bohrungen als Teil des Entlüftungskanals verfügt.

Gemäß einer weiteren Ausgestaltung der Erfindung wird über die relative Drehstellung zwischen Schraubverschluß und Drehverschluß die Durchflußöffnung des Trinkkanals von maximal - ca. 5 mm Durchmesser Durchgangsbohrung für die Trinkhalmaufnahme - bis minimal eingestellt, auch je nach der Viskosität - dünnflüssig bis pastös - des Flascheninhalts, bei gleichzeitiger Öffnung des Entlüftungskanals. Die hufeisenförmige Vertiefung mit zwei kleinen Bohrungen als Teil des Entlüftungskanals ist so lagegerecht gestaltet, daß bereits bei noch geschlossener und verrasteter Verschlußkappe Überdruck aus dem Flaschenkörper über die Entlüftungsbohrung des Schraubverschlusses und die Vertiefung und die Entlüftungsbohrungen des Drehverschlusses nach außen entweichen kann, ohne Folgen des Verspritzens für den Benutzer der Flasche.

Eine weitere Ausgestaltung der Erfindung sieht vor, daß der Drehverschluß eine im wesentlichen zylinderförmige einstückige Kunststoffplatte mit zwei Befestigungshaken ist, einem Verstärkungsteil mit einer nach außen verlängerten Aufnahme sowie einem asymmetrisch auf das Verstärkungsteil aufgesetztem Mundstück. Die Platte ist berandet und bildet auf der Unterseite innen eine rechteckförmige Vertiefung, so daß die sich ergebende Wandung in die zylindrische Nut des Schraubverschlusses eingreifen kann, wobei das Dichtmittel eine drehbare, aber dichte Verbindung gestattet. Zur Mitte hin erhebt sich auf der Unterseite eine hervorstehende gegen die Vertiefung des Schraubverschlusses dichtende Zylinderfläche, die einerseits über eine Durchgangsbohrung als Teil des Trinkkanals und andererseits über eine hufeisenförmige Vertiefung mit zwei kleinen Bohrungen als Teil des Entlüftungskanals verfügt. Die Befestigungshaken greifen in die schlitzförmigen Ausnehmungen des Schraubverschlusses, so daß Schraubverschluß und Drehverschluß dicht und mit Anschlägen versehen drehgelagert sind. Die Durchgangsbohrung durch Mundstück, Verstärkungsteil, Deckelfläche und Zylinderfläche bildet einen Teil des Trinkkanals. Die beiden Entlüftungsbohrungen sind Durchgangsbohrungen durch Zylinderfläche, Deckelfläche und Verstärkungsteil und treten auf der Oberseite desselben aus. Die Aufnahme stellt die mechanisch dreh- und lösbare Verbindung zur Ver-schlußkappe über das Gelenk her.

Gemäß einer weiteren Ausgestaltung der erfinderischen Neuheit zeichnet sich die Verschlußkappe durch eine Reihe von Funktionen aus
- Teil der Flaschenverschlußeinrichtung
- Mundstück, äußerlich, und die Bohrung sauber halten
- Schutz des Drehlagers Schraubverschluß/Drehverschluß vor eindringendem Schmutz
- Schutz vor Spritzern bei entweichendem Überdruck vor dem Öffnen
- Aufnahme zu verwendender oder verwendeter Trinkhalme
- Schirm als Griffrand
- Schirm mit Bedienhinweis 'Öffnen'/'Schließen'oder Zustandsanzeige 'Offen'/ 'Geschlossen', 'Open'/'Close'
- Handgriff für die Betätigung des Drehverschlusses/Flaschenventils
- Öffnen/Aufklappen erst, wenn Schraub- und Drehverschluß sich in einer 'Offen'-Stellung befindet, Drehstellung 3 ... 5
- Drehstellung 1 - 'Geschlossen'
- Drehstellung 2 - 'Überdruck ablassen'/'Entlüften'
- Drehstellung 3 - 'Offen', minimal
- Drehstellung n, 3 < n < 5 - 'Offen', mittel
- Drehstellung 5 - 'Offen', maximal, Trinkhalm-Einsatz.

Eine weitere Ausgestaltung der Erfindung sieht vor, daß die Verschlußkappe etwa halbkugelförmig gestaltet ist, mit einem Schirm als Griffrand, als Aufnahme für Trinkhalme und mit Bedienhinweis 'Öffnen'/'Schließen', und über das Kappengelenk mit dem Drehverschluß gerastet klappbar verbunden. Die Verschlußkappe ist beidseitig mit Griffmulden versehen, die über Griffleisten für den besseren Griff bei Verdrehen in horizontaler Ebene verfügen. Außerdem ist eine Zeigefingermulde für den ergonomischen 3-Finger-Griff vorgesehen. Auf der'rückwärtigen Seite der Zeigefingermulde ist ein vertikaler Steg mit einem Rasthaken angebracht, der in geschlossenem Zustand der Verschlußkappe durch Rastvorsprung verriegelt ist.

Ausgehend von einer geschlossenen Trinkflasche - Drehstellung 1, findet der Zugang zum Mundstück zunächst stets über das Verdrehen der Verschlußkappe in 'Offen'-Richtung statt, entweder bis die Verschlußkappe sich aufklappen läßt - Drehstellung 3 - minimaler Durchfluß - oder durch Verdrehen bis zum Anschlag - Drehstellung 5 - maximaler Durchfluß, Öffnung für Trinkhalme. Beim Übergang von der Drehstellung 1 'Geschlossen' in die Drehstellung 3 'Offen' wird der Zustand 'Überdruck ablassen/Entlüften' überfahren; in dieser Drehstellung 2 kann die Verschlußkappe nicht geöffnet werden. Die Drehstellung n, 3 < n < 5, erlaubt beliebig viele mögliche Zwischenschritte, die gemäß dem gewünschten Durchfluß und der Viskosität des Flascheninhalts von dünnflüssig bis pastös eingestellt werden können. Die auf die Verschlußkappe ausgeübte Torsionskraft wird über das Kappengelenk/Aufnahme auf den Drehverschluß übertragen, der sich stets örtlich und zeitlich gleich mit der Verschlußkappe in Drehrichtung bewegt - bei feststehendem Schraubverschluß (dicht verschraubt mit Flaschenkörper).

Aus dem mechanischen Zusammenwirken von Schraubverschluß, Drehverschluß und Verschlußkappe ergeben sich folgende vorteilhafte Ausprägungen
- Der Rasthaken greift bei aufliegender Verschlußkappe auf der Deckelfläche verdrehbar unter den Rastvorsprung
- Die Drehrichtung der Verschlußkappe im Uhrzeigersinn wird
- einerseits durch den Rasthaken vor Anschlag des Rastvorsprungs
- andererseits durch die Befestigungshaken in Schlitz begrenzt
- Die Dicke des Ansatzes ist so gestaltet, daß seine Zylinderfläche gegen die Stege und die Berandung des Durchbruchs dichtet
- Die Winkellage von Verschlußkappe, Drehverschluß und Schraubverschluß ist so gewählt, daß die Verschlußeinrichtung in Drehstellung 1 dichtet, in Drehstellung 2 entlüftet, in Drehstellung 3 minimal, in Drehstellung n, 3 < n < 5, mittelmäßig und in Drehstellung 5 gänzlich öffnet
- Drehstellung 3 ... 5 bildet einen Trinkkanal aus Durchbruch, Durchgangsbohrung, Deckelfläche, Verstärkungsteil und Mundstück
- Drehstellung 2 ... 5 bildet einen Entlüftungskanal aus Bohrung, Vertiefungen, Bohrungen, Deckelfläche und Verstärkungsteil
- Lage von Aufnahme/Kappengelenk ist so gestaltet, daß Außenwand in Nut greift und Verschlußkappe bündig mit Deckelfläche und Außenschale liegt
- Die Winkellage der Drehstellung entspricht der Drehstellungsanzeige
- Die Hinweise des Beschriftungsfelds entsprechen der Drehrichtung.

Der Gegenstand der Erfindung wird nachfolgend anhand der als Anlage beigefügten Zeichnungen von Ausführungsbeispielen weiter verdeutlicht. Es zeigen
- **Fig. 1**: Gesamtansicht Trinkflasche, Explosionsdarstellung
- **Fig. 2**: Schraubverschluß
**a)** Schraubverschluß, Draufsicht
**b)** Schraubverschluß, Seitenansicht 1
**c)** Schraubverschluß, Seitenansicht 2 im Schnitt
**d)** Schraubverschluß, Perspektive
- **Fig. 3**: Drehverschluß mit Mundstück
**a)** Drehverschluß, Unteransicht
**b)** Drehverschluß, Seitenansicht 1
**c)** Drehverschluß, Seitenansicht 2
**d)** Drehverschluß, Perspektive
- **Fig.4**: Verschlußkappe
**a)** Verschlußkappe, Unteransicht
**b)** Verschlußkappe, Seitenansicht 1
**c)** Verschlußkappe, Seitenansicht 2
**d)** Verschlußkappe, Perspektive.

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

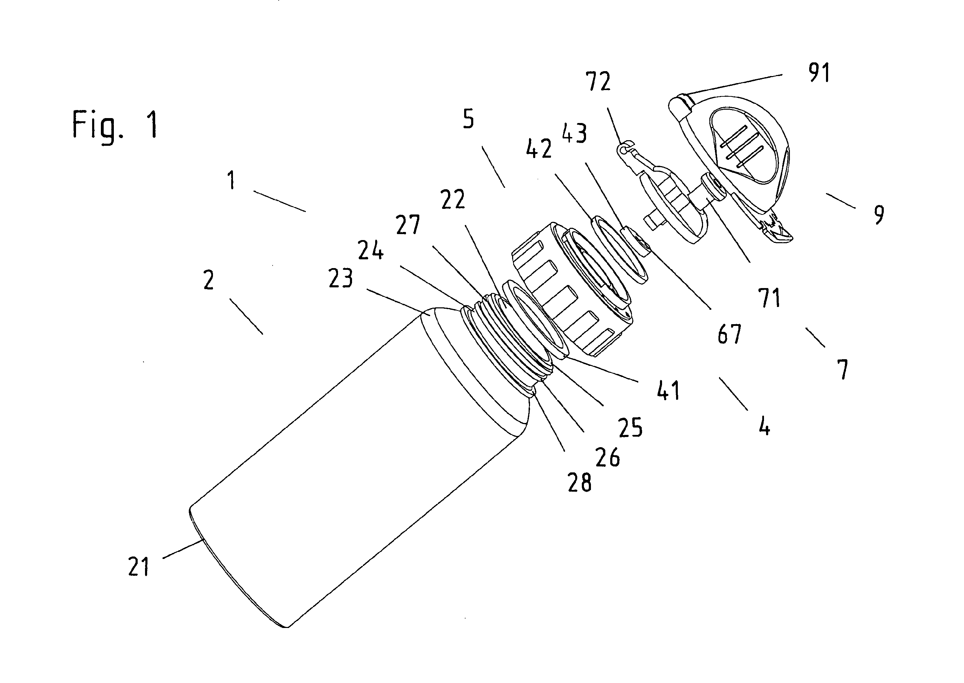

Wie aus **Fig. 1** ersichtlich, besteht die Trinkflasche **1** gemäß der erfinderischen Neuheit aus einem hohlzylinderförmigen metallenen Flaschenkörper **2** mit einem Kunststoff-Außengewinde **27** am Flaschenhals **22,** das mit einer zylinderförmigen Flaschenverschlußeinrichtung **4** mit Innengewinde **51** in dichter **41** lösbarer Verbindung steht, die aus einem Schraubverschluß **5** besteht, der über eine weitere Dichtung **42** ein drehbar **7** gelagertes Mundstück 71 aufnimmt, welches außerdem über eine angespritzte Aufnahme **72** verfügt, die mit dem Kappengelenk **91** der etwa halbkugelförmigen Verschlußkappe **9** klappbar und - auf der gegenüberliegenden Seite - mit dem Verschluß **5** rastbar **92** in Verbindung steht.

Der Flaschenkörper **2** der Trinkflasche **1** ist aus Aluminium gefertigt mit einem nach innen gewölbtem Flaschenboden **21**. Zum Flaschenhals **22** hin verjüngt sich der Flaschenkörper in Form einer Kugelkalotte **23** zu einem hohlzylinderförmigen Ansatz **24**, der mit einer schmalen, rechtwinklig nach außen abgeknickten Berandung **25** endet. Der Ansatz ist Träger eines angespritzten, drehfest sitzenden Kunststoffrings **26**, versehen mit einem Außengewinde **27**, welches am unteren Anschlag **28** des Kunststoffrings endet. Die Flasche ist innen absolut oberflächenglatt beschichtet und außen farbig lackiert.

Die Flaschenverschlußeinrichtung **4** besteht aus einem Schraubverschluß **5,** einem Drehverschluß **7** mit Mundstück **71** sowie einer Verschlußkappe **9**.

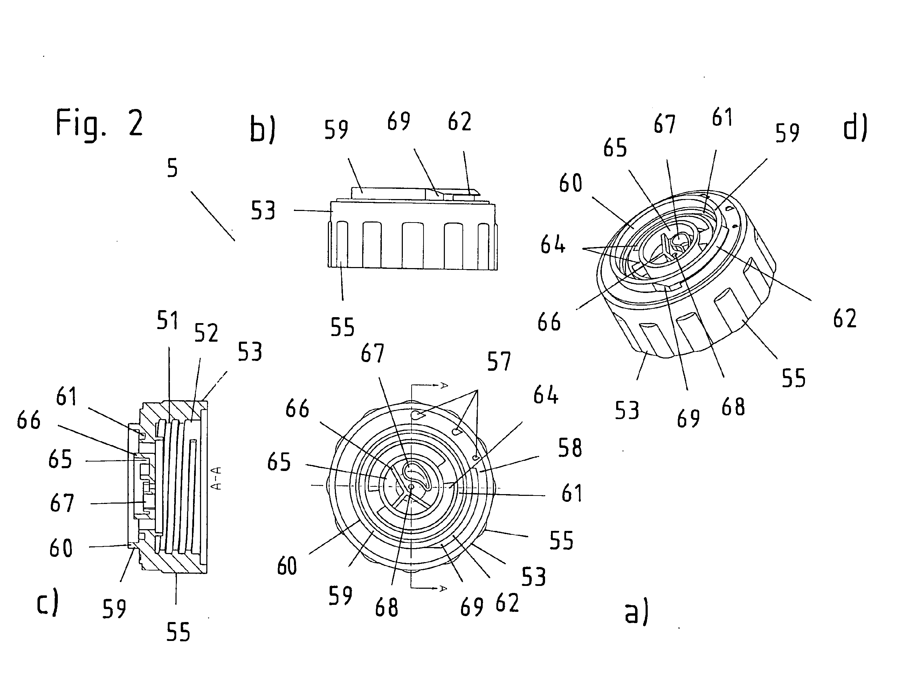

**Fig. 2** zeigt den Schraubverschluß **5** als Teil der Flaschenverschlußeinrichtung **4** in **a)** Draufsicht, **b)** Seitenansicht 1, **c)** Seitenansicht 2 und im Schnitt und **d)** Perspektive.

Der topfförmig ausgeprägte Schraubverschluß **5** besitzt eine zweischalig ausgeführte, durch Verbindungsstege **54** gestützte, zylinderförmige Seitenwand **52 , 53 ,** wobei die Außenschale **53** die Griffläche **55** bildet und durch Rippen und Griffmulden kenntlich ist, während die Innenschale **52** das mehrgängige Innengewinde **51 -** passend zum Außengewinde **27** des Flaschenkörpers **2 -** trägt, das der Schraubverbindung einen festen Sitz ermöglicht. Das Innengewinde läuft innen in einer durch einen zylinderförmigen Ansatz **56** gebildeten zylindrischen Rechtecknut aus, die die Flachdichtung **41** aufnimmt und die Dichtung zur Berandung **25** des Ansatzes **24** des Flaschenhalses **22** darstellt.

Der Schraubverschluß **5** bildet mit dem Drehverschluß **7** und dem Mundstück **71** das Flaschenventil **43 ,** welches mehrere Betriebszustände durch Drehstellungen **57** abbildet. Dazu besitzt der Schraubverschluß auf seiner Oberseite - der Deckelfläche **58 -** einen rohrförmigen außenliegenden Ansatz 59 , dessen innenliegende Zylinderwand **60** die Führung für den Drehverschluß darstellt und selbigen aufnimmt. Die Außenwand **74** des Drehverschlusses ragt in eine zylinderförmige Nut **61** bündig zur innenliegenden Zylinderwand, nimmt eine weitere ringförmige Flachdichtung **42** auf und dichtet zwischen Schraubverschluß und Drehverschluß ab.

Diese Zylinderwand hat mit dem über eine bestimmte Länge - Drehwinkel - ausgedehnten, nach außen ragenden Rastvorsprung mit einseitigem Endanschlag **62** eine weitere Funktion inne; der Rasthaken **92** der mit dem Drehverschluß mechanisch in Verbindung stehenden Verschlußkappe **9** greift durch Hinterschnitt **63** unterhalb des Rastvorsprungs und verriegelt die Verschlußkappe über die Länge/den Drehwinkel des Vorsprungs.

Zur Mitte des Schraubverschlusses **5** hat die Fläche **58** zwei fast halbkreisförmige Schlitze **64 ,** wo die Befestigungshaken **73** des Drehverschlusses **7** durchstoßen und unterhalb der Fläche verrasten, wobei die Längenausprägung der Schlitze den Verfahr-/Drehweg für den Drehverschluß und die mit diesem beweglich verbundenen Verschlußkappe darstellt.

Im Zentrum des Schraubverschlusses **5** bildet sich eine von außen topfförmige Vertiefung **65** mit einem durch drei Stege **66** dreigeteilten Raum mit etwa zweimal 1/4 Rauminhalt und einmal 1/2 Rauminhalt. Der große Raum besitzt etwa mittig eine kleine Bohrung **68 ,** die die Funktion der Entlüftungsbohrung inne hat und einen Teil des Entlüftungskanals bildet. Weiterhin hat dieser Raum einen tropfenförmigen, berandeten Durchbruch **67 ,** der einen Teil des einstellbaren Trinkkanals bildet. Die topfförmige Vertiefung wird bis Oberkante Stege und tropfenförmige Berandung durch eine hervorstehende dichtende Zylinderfläche **75** des Drehverschlusses **7** gedeckelt, die einerseits über eine Durchgangsbohrung **76** als Teil des Trinkkanals und andererseits über eine hufeisenförmige Vertiefung **77** mit zwei kleinen Bohrungen **78** als Teil des Entlüftungskanals verfügt.

Über die relative Drehstellung zwischen Schraubverschluß **5** und Drehverschluß **7** kann die Durchflußöffnung **67 , 76** des Trinkkanals von maximal - ca. 5 mm Durchmesser Durchgangsbohrung für die Trinkhalmaufnahme - bis minimal eingestellt werden, auch abhängig je nach der Viskosität - dünnflüssig bis pastös - des Flascheninhalts, bei gleichzeitiger Öffnung des Entlüftungskanals **68 , 77 , 78 .** Die hufeisenförmige Vertiefung **77** mit zwei kleinen Bohrungen **78** als Teil des Entlüftungskanals ist so lagegerecht gestaltet, daß bereits bei noch geschlossener und verrasteter Verschlußkappe 9 durch Rasthaken **92** und Rastvorsprung **62** Überdruck aus dem Flaschenkörper über die Entlüftungsbohrung **68** des Schraubverschlusses und die Vertiefung **77** und die Entlüftungsbohrungen **78** des Drehverschlusses nach außen entweichen kann, ohne Folgen des Verspritzens für den Benutzer der Flasche.

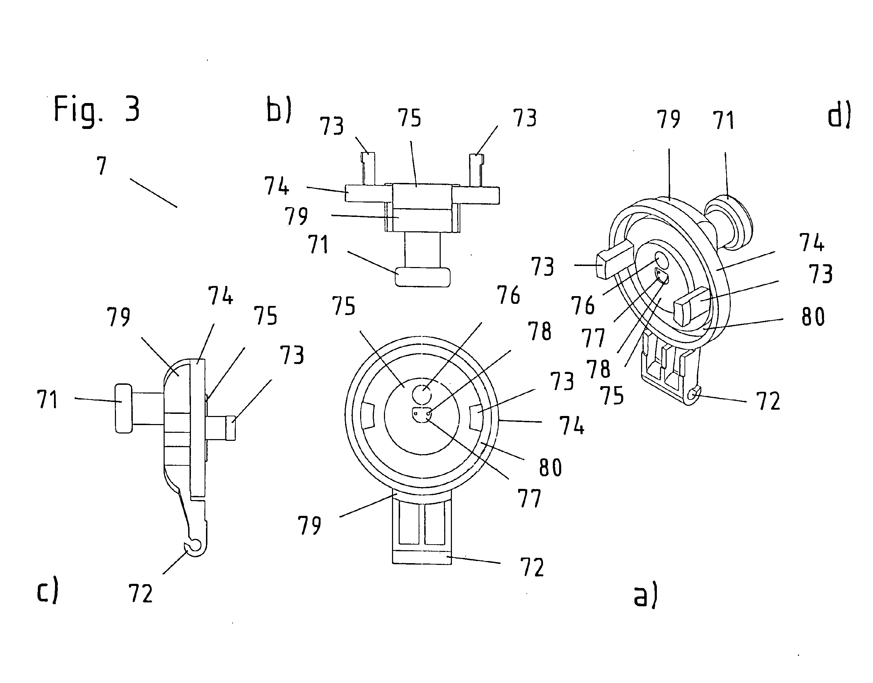

**Fig. 3** zeigt den Drehverschluß **7** mit Mundstück **71** als Teil der Flaschenverschlußeinrichtung **4** in **a)** Unteransicht, **b)** Seitenansicht 1, **c)** Seitenansicht 2 und **d)** Perspektive.

Der Drehverschluß **7** ist eine im wesentlichen zylinderförmige einstückige Kunststoffplatte mit zwei Befestigungshaken **73 ,** einem Verstärkungsteil **79** mit einer nach außen verlängerten Aufnahme **72** sowie einem asymmetrisch auf das Verstärkungsteil aufgesetzten Mundstück **71 .** Die Platte ist berandet **74** und bildet auf der Unterseite innen eine rechteckförmige Vertiefung **80 ,** so daß die sich ergebende Wandung in die zylindrische Nut **61** des Schraubverschlusses **5** eingreifen kann, wobei das Dichtmittel **42** eine drehbare, aber dichte Verbindung gestattet. Zur Mitte hin erhebt sich auf der Unterseite eine hervorstehende gegen die Vertiefung **65** des Schraubverschlusses dichtende Zylinderfläche **75 ,** die einerseits über eine Durchgangsbohrung **76** als Teil des Trinkkanals und andererseits über eine hufeisenförmige Vertiefung **77** mit zwei kleinen Bohrungen **78** als Teil des Entlüftungskanals verfügt. Die Befestigungshaken greifen in die schlitzförmigen Ausnehmungen **64** des Schraubverschlusses, so daß Schraubverschluß und Drehverschluß dicht und mit Anschlägen versehen drehgelagert sind. Die Durchgangsbohrung durch Mundstück, Verstärkungsteil, Deckelfläche und Zylinderfläche bildet einen Teil des Trinkkanals. Die beiden Entlüftungsbohrungen sind Durchgangsbohrungen durch Zylinderfläche, Deckelfläche und Verstärkungsteil und treten auf der Oberseite desselben aus. Die Aufnahme **72** stellt die mechanisch dreh- und lösbare Verbindung zur Verschlußkappe **9** über das Gelenk **91** her.

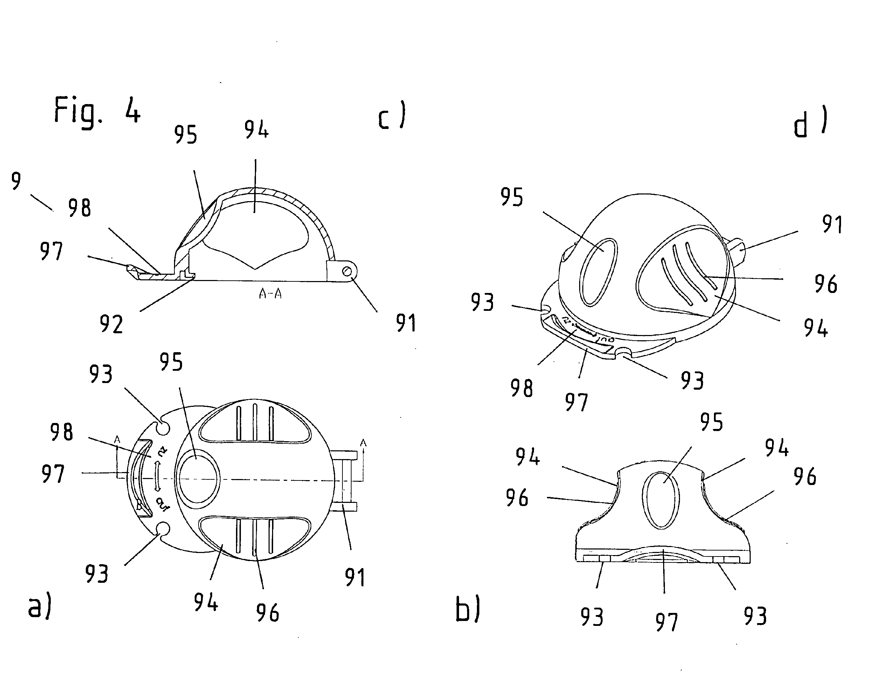

**Fig. 4** zeigt die Verschlußkappe **9** in **a)** Unteransicht, **b)** Seitenansicht 1, c) Seitenansicht 2, **d)** Perspektive.

Die Verschlußkappe **9** zeichnet sich durch eine Reihe von Funktionen aus
- Teil der Flaschenverschlußeinrichtung **4**
- Mundstück **71 ,** äußerlich, und die Bohrung **76** sauber halten
- Schutz des Drehlagers Schraubverschluß **5** /Drehverschluß **7** vor eindringendem Schmutz
- Schutz vor Spritzern bei entweichendem Überdruck **78** vor dem Öffnen
- Aufnahme zu verwendender oder verwendeter Trinkhalme **93**
- Schirm als Griffrand **97**
- Schirm mit Bedienhinweis 'Öffnen 7'Schließen' oder Zustandsanzeige 'Offen'/' 'Geschlossen', 'Open'/'Close'
- Handgriff **94 ... 96** für die Betätigung des Drehverschlusses/Flaschenventils **43**
- Ergonomische Bedienung durch 3-Finger-Griff **94 , 95 , 96**
- Öffnen/aufklappen erst, wenn Schraub- und Drehverschluß **5 , 7** sich in einer 'Offen'-Stellung befindet, Drehstellung 3 ... 5
- Drehstellung 1 - 'Geschlossen'
- Drehstellung 2 - 'Überdruck ablassen'/'Entlüften'
- Drehstellung 3 - 'Offen', minimal
- Drehstellung n, 3 < n < 5 - 'Offen', mittel
- Drehstellung 5 - 'Offen', maximal, Trinkhalm-Einsatz.

Die Verschlußkappe **9** ist etwa halbkugelförmig gestaltet, mit einem Schirm als Griffrand **97 ,** als Aufnahme für Trinkhalme **93** und mit Bedienhinweis 'Öffnen'/'Schliessen' **98 ,** und über das Kappengelenk **91** mit dem Drehverschluß **7** gerastet klappbar **72** verbunden. Die Verschlußkappe ist beidseitig mit Griffmulden **94** versehen, die über Griffleisten **96** für den besseren Griff bei Verdrehen in horizontaler Ebene verfügen. Außerdem ist eine Zeigefingermulde **95** für den ergonomischen 3-Finger-Griff vorgesehen. Auf der rückwärtigen Seite der Zeigefingermulde ist ein vertikaler Steg mit einem Rasthaken **92** angebracht, der in geschlossenem Zustand der Verschlußkappe durch Rastvorsprung **62** verriegelt ist.

Ausgehend von einer geschlossenen Trinkflasche **1 -** Drehstellung 1, findet der Zugang zum Mundstück **71** zunächst stets über das Verdrehen der Verschlußkappe **9** in 'Offen'-Richtung statt, entweder bis die Verschlußkappe sich aufklappen läßt - Drehstellung 3 - minimaler Durchfluß - oder durch Verdrehen bis zum Anschlag **69 -** Drehstellung 5 - maximaler Durchfluß, Öffnung für Trinkhalme. Beim Übergang von der Drehstellung 1 'Geschlossen' in die Drehstellung 3 'Offen' wird der Zustand 'Überdruck ablassen/Entlüften' überfahren; in dieser Drehstellung 2 kann die Verschlußkappe nicht geöffnet werden. Die Drehstellung n, 3 < n < 5, erlaubt beliebig viele mögliche Zwischenschritte, die gemäß dem gewünschten Durchfluß und der Viskosität des Flascheninhalts von dünnflüssig bis pastös eingestellt werden können. Die auf die Verschlußkappe ausgeübte Torsionskraft wird über das Kappengelenk **91** / Aufnahme **72** auf den Drehverschluß **7** übertragen, der sich stets örtlich und zeitlich gleich mit der Verschlußkappe in Drehrichtung bewegt - bei feststehendem Schraubverschluß **5** (dicht verschraubt mit Flaschenkörper 2 ).

Aus dem mechanischen Zusammenwirken von Schraubverschluß **5 ,** Drehverschluß **7** und Verschlußkappe **9** ergeben sich folgende Abhängigkeiten
- Der Rasthaken **92** greift bei aufliegender Verschlußkappe auf der Deckelfläche **58** verdrehbar unter den Rastvorsprung **62**
- Die Drehrichtung der Verschlußkappe im Uhrzeigersinn wird
- einerseits durch den Rasthaken **92** vor Anschlag **69** des Rastvorsprungs **62**
- andererseits durch die Befestigungshaken **73** in Schlitz **64** begrenzt
- Die Dicke des Ansatzes **75** ist so gestaltet, daß seine Zylinderfläche gegen die Stege **66** und die Berandung des Durchbruchs **67** dichtet
- Die Winkellage von Verschlußkappe, Drehverschluß und Schraubverschluß ist so gewählt, daß die Verschlußeinrichtung **4** in Drehstellung 1 dichtet, in Drehstellung 2 entlüftet, in Drehstellung 3 minimal, in Drehstellung n, 3 < n < 5, mittelmäßig und in Drehstellung 5 gänzlich öffnet
- Drehstellung 3 ... 5 bildet einen Trinkkanal aus Durchbruch **67 ,** Durchgangsbohrung **76 ,** Deckelfläche **58 ,** Verstärkungsteil **79** und Mundstück **71**
- Drehstellung 2 ... 5 bildet einen Entlüftungskanal aus Bohrung **68 ,** Vertiefung **65,** Vertiefung **77 ,** Bohrungen **78 ,** Deckelfläche **58** und Verstärkungsteil **79**
- Lage von Aufnahme **72** / Kappengelenk **91** ist so gestaltet, daß Außenwand **74** in Nut **61** greift und Verschlußkappe bündig mit Deckelfläche **58** und Außenschale **53** liegt
- Die Winkellage der Drehstellung entspricht der Drehstellungsanzeige **57**
- Die Hinweise des Beschriftungsfelds **98** entsprechen der Drehrichtung.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

### Bezugszeichenliste

- 1: Trinkflasche

- 2: Flaschenkörper
- 21: Flaschenboden
- 22: Flaschenhals
- 23: Kugelkalotte
- 24: Ansatz

- 25: Berandung
- 26: Kunststoffring
- 27: Außengewinde
- 28: Anschlag

- 4: Verschlußeinrichtung
- 41: Dichtung 1
- 42: Dichtung 2
- 43: Flaschenventil

- 5: Schraubverschluß
- 51: Innengewinde
- 52: Seitenwand, Innenschale
- 53: Seitenwand, Außenschale
- 54: Verbindungssteg

- 55: Griffläche
- 56: Ansatz, Rechtecknut
- 57: Drehstellungsanzeige
- 58: Deckelfläche
- 59: Ansatz

- 60: Zylinderwand
- 61: Nut
- 62: Rastvorsprung
- 63: Hinterschneidung
- 64: Schlitz

- 65: Vertiefung
- 66: Steg
- 67: Durchbruch, Berandung
- 68: Bohrung
- 69: Anschlag

- 7: Drehverschluß
- 71: Mundstück
- 72: Aufnahme
- 73: Befestigungshaken
- 74: Außenwand

- 75: Zylinderfläche

- 76: Durchgangsbohrung
- 77: Vertiefung
- 78: Bohrung
- 79: Verstärkungsteil

- 80: Vertiefung

- 9: Verschlußkappe
- 91: Kappengelenk
- 92: Rasthaken
- 93: Trinkhalmaufnahme
- 94: Griffmulde

- 95: Zeigefingermulde
- 96: Griffleiste
- 97: Griffrand
- 98: Beschriftungsfeld

## Patentansprüche

1. Trinkverschluß für eine Trinkflasche zur Getränkeaufbewahrung für Schule, Sport, Reise und Freizeit - insbesondere ein Verschluß für eine Kinder-Trinkflasche zur Getränkeaufbewahrung für Schule, Sport, Reise und Freizeit mit einstellbarer Entnahme und Trinkhalmfunktion, **dadurch gekennzeichnet, daß**
- die Trinkflasche (1) aus einem Flaschenkörper (2) und einer Verschlußeinrichtung (4) besteht
- die Verschlußeinrichtung aus einem dicht mit dem Flaschenkörper (2) verbundenen Schraubverschluß (5) aufgebaut ist
- sowie einem Drehverschluß (7) mit Mundstück (71), der gerastet und gedichtet in dem Schraubverschluß über einen festgelegten Winkel drehbar gelagert ist
- sowie einer Verschlußkappe (9), die über ein rastbares Gelenk (72, 91) mit dem Drehverschluß schwenkbar verbunden ist
- die Verschlußeinrichtung einen Trinkkanal (67, 76, 58, 71) und einen Entlüftungskanal ( 68, 65, 77, 78, 58, 79) beinhaltet und
- der Trinkkanal in Drehverschluß-Drehrichtung 'Schließen'/'Geschlossen'T'Close' einen sich verjüngenden bzw. in umgekehrter Drehrichtung 'Öffnen'/'Offen'/'Open' einen sich aufweitenden Durchbruch (67) des Schraubverschlusses (5) aufweist, der mit der Durchgangsbohrung (76) des Drehverschlusses (7) ein Trinkkanal-Ventil bildet.

2. Verschluß für eine Trinkflasche nach Anspruch 1, **dadurch gekennzeichnet, daß** durch die Relativdrehbewegung zwischen Schraubkappe (5) mit Durchbruch (67) und Drehverschluß (7) mit Durchgangsbohrung (76) unterschiedliche Ventil-Querschnitte für den Trinkkanal eingestellt werden.

3. Verschluß für eine Trinkflasche nach mindestens einem der Ansprüche 1 und 2, **dadurch gekennzeichnet, daß** die Trinkkanal-Ventilkennlinie von der Querschnittsform des Durchbruchs (67) des Schraubverschlusses (5) sowie der Durchgangsbohrung (76) des Drehverschlusses (7) abhängig ist.

4. Verschluß für eine Trinkflasche nach mindestens einem der Ansprüche 1 bis 3, **dadurch gekennzeichnet, daß** die Querschnittsform des Durchbruchs (67) des Schraubverschlusses (5) eine gebogene Tropfenform, eine langgestreckte gebogene Dreiecksform, ein gebogenes Drachenviereck, ein langgestrecktes gebogenes n-Eck oder eine Kombination aus diesen oder eine andere geometrische Form ist, die eine Lösung der vorgegebenen Aufgabe darstellt.

5. Verschluß für eine Trinkflasche nach mindestens einem der Ansprüche 1 bis 4, **dadurch gekennzeichnet, daß** die Verschlußkappe (9) mit ihren durch 3-Finger-Griff zu handhabenden, erhabenen ergonomisch gestalteten Mulden (94, 95) mit Griffleiste (96) für die Verdrehung in horizontaler Ebene einen Drehknopf für den Drehverschluß (7) über die Anbindung (72, 91) bildet.

6. Verschluß für eine Trinkflasche nach mindestens einem der Ansprüche 1 bis 5, **dadurch gekennzeichnet, daß** die Verschlußkappe (9) durch ihren Rasthaken (92) über den Rastvorsprung (62) des Schraubverschlusses (5) im Bereich der Drehstellung 1 - 'Geschlossen' - und der Drehstellung 2 - 'Überdruck ablassen'/'Entlüften' geschlossen und erst im Bereich der Drehstellungen n, 3 <= n <= 5, aufklappbar ist.

7. Verschluß für eine Trinkflasche nach mindestens einem der Ansprüche 1 bis 6, **dadurch gekennzeichnet, daß** die Längenausdehnung der Schlitze (64) des Schraubverschlusses (5) über die Befestigungshaken (73) des Drehverschlusses (7) den möglichen Drehwinkel der Drehstellungen 1 ... 2 ... n, 3 <= n <= 5 und damit die Funktionalität der Verschlußeinrichtung (4) festlegen sowie der Rasthaken (92) der Verschlußkappe (9) über den Rastvorsprung (62) des Schraubverschlusses (5) bis zum Anschlag (69).

8. Verschluß für eine Trinkflasche nach mindestens einem der Ansprüche 1 bis 7, **dadurch gekennzeichnet, daß** der Trinkkanal (67, 76, 71) in der Drehstellung 5 trinkhalmgerecht gestaltet und geöffnet ist.

9. Verschluß für eine Trinkflasche nach mindestens einem der Ansprüche 1 bis 8, **dadurch gekennzeichnet, daß** der Griffrand (97) der Verschlußkappe (9) ein Beschriftungsfeld (98) für Bedienhinweise ist und Ausnehmungen für eine Trinkhalmaufnahme (93) besitzt.

10. Behälter mit einer Verschlußeinrichtung nach einem der obigen Ansprüche.
